# EUROPÄISCHE PATENTANMELDUNG

(11) **EP 4 477 417 A1**
(43) Veröffentlichungstag der Anmeldung: **18.12.2024**
(21) Anmeldenummer: 24172538.1
(22) Anmeldetag: 25.04.2024
(51) Int. Cl.: B33Y 80/00, A61C 5/77, A61C 13/01, A61C 13/08, A61C 13/083, A61C 13/087, B33Y 40/20

(54) **VERFAHREN ZUR HERSTELLUNG EINER DENTALEN RESTAURATION**

(30) Priorität: 13.06.2023 EP 23178972
(71) Anmelder: Vita Zahnfabrik H. Rauter GmbH & Co. KG, 79713 Bad Säckingen (DE)
(72) Erfinder: KERSCHENSTEINER, Eva, 79713 Bad Säckingen (DE); FÖRTSCH, Jürgen, 79713 Bad Säckingen (DE)
(74) Vertreter: dompatent von Kreisler Selting Werner - Partnerschaft von Patent- und Rechtsanwälten mbB

(57) **Zusammenfassung**

Verfahren zur Herstellung einer dentalen Restauration, insbesondere einer Prothese oder Teilprothese, basierend auf digitalen Daten, insbesondere digitalen Daten aus einer Zahndatenbibliothek, umfassend die Schritte:
a) additive Fertigung einer dentalen Restauration mit teilflächigem Aufmaß, vorzugsweise mit teilflächigem Aufmaß einer vestibulären Fläche, und anschließend
b) subtraktive Bearbeitung der Teilflächen mit Aufmaß unter Ausbildung der dentalen Restauration, vorzugsweise mit gewünschter Oberflächenstruktur.

## Beschreibung

Die Erfindung betrifft ein Verfahren zur Herstellung einer dentalen Restauration, insbesondere einer Prothese oder Teilprothese, basierend auf digitalen Daten. Die Erfindung betrifft außerdem deine dentale Restauration hergestellt nach dem erfindungsgemäßen Verfahren.

Bei der dentalen Restauration werden Zahndefekte bzw. zerstörte Zahnsubstanz durch künstliche Materialien ersetzt. Traditionell ist die Herstellung von dentalen Restaurationen handwerklich geprägt. Zahnärzte entfernen geschädigte Zahnsubstanz und ersetzten diese mit plastischen Füllungsmaterialien (Amalgam, Composite). Bei größeren Defekten wird die Restauration von einem Zahntechniker hergestellt. Diese sogenannte indirekte Herstellung wird über Abdrücke und Modelle vorgenommen und es dauert in der Regel einige Tage, bis die Restauration in den Mund des Patienten eingesetzt werden kann. Diese Herstellung ist zeitintensiv, teuer und für den Patienten mit mehreren Sitzungen beim Zahnarzt verbunden. Zudem kann die Qualität der zahntechnischen Arbeit kaum kontrolliert werden.

Seit einigen Jahren besteht auch die Möglichkeit, Zahnersatz automatisiert mit CAD/CAM-Systemen herzustellen. CAD steht für "computer aided design" und CAM für "computer aided manufacturing". Nach einer digitalen Abdrucknahme (Scannen im Mund des Patienten oder an einem Duplikatmodell) kann der Zahnersatz auf Basis der Scandaten mit einer Fräsmaschine aus Vollmaterial gefräst bzw. geschliffen werden. Dadurch werden die Wartezeiten für den Patienten deutlich verkürzt und Qualitätskontrollen können in der Software berücksichtigt werden. Diese subtraktiven (abtragenden) Herstellungsverfahren haben allerdings den Nachteil, dass der größte Teil der eingesetzten Hochleistungskeramik verloren geht.

Anstelle der material- und werkzeugintensiven subtraktiven Verfahren können sogenannte additive (aufbauende) Fertigungsverfahren eingesetzt werden. Als Synonym für diese additiven Fertigungsverfahren werden oftmals die Begriffe "Rapid Prototyping", "Rapid Manufacturing", "Solid Free Form Fabrication" oder "Generative Fertigungsverfahren" verwendet. Unter den zuvor genannten Begriffen werden verschiedene additive Fertigungsverfahren zusammengefasst, bei denen aus computergestützten Konstruktionsdaten (CAD-Daten) dreidimensionale (3D) Modelle oder Bauteile hergestellt werden. Beispiele für typische additive Fertigungsverfahren sind Stereolithographie, 3D-Druckverfahren und Inkjet-Modeling. Das Prinzip der additiven Fertigung beruht auf dem schichtweisen Aufbau eines dreidimensionalen Bauteils. Dabei werden zweidimensionale Schichten (XY-Ebene) aufeinandergelegt. Je nach Dicke der Schichten entsteht in Baurichtung (Z-Richtung) eine mehr oder minder starke Abstufung des Bauteils. Die additive Fertigung ist deutlich kosteneffizienter umzusetzen als die subtraktiven Verfahren. Zudem erlauben additive Fertigungsverfahren eine parallele Fertigung, die eine signifikante Zeitersparnis und Erhöhung der Produktivität bewirkt.

Die additiven Fertigungsverfahren haben - ebenso wie die subtraktiven Fertigungsverfahren - jedoch den Nachteil, dass markante und charakteristische Details einer dentalen Restauration nicht abgebildet werden können. Die zur Herstellung der dentalen Restauration verwendeten digitalen Daten (CAD-Daten), welche die wesentlichen Details zur Oberflächenmorphologie der dentalen Restauration enthalten, können weder mit additiven noch mit subtraktiven Fertigungsverfahren alle charakteristischen Merkmale der dentalen Restauration abbilden. Zudem hinterlassen sowohl additive als auch subtraktive Fertigungsverfahren Spuren auf der dentalen Restauration, die durch Nachbearbeitung, z.B. durch Polieren der Oberfläche, entfernt werden müssen. Dadurch wird so viel Material abgetragen, dass die markanten Details der Oberfläche der dentalen Restauration, also die typische Oberflächenmorphologie der dentalen Restauration oder des Zahns, teilweise oder vollständig verschwinden. Dies hat zum einen negative Auswirkungen auf den ästhetischen Eindruck, der von der fertigen dentalen Restauration hervorgerufen wird. Zum anderen wird auch die Speichelbenetzbarkeit der fertigen dentalen Restauration herabgesetzt, was im Mund ein starkes Störgefühl hervorruft.

US 2017/0273766 A1 beschreibt ein Verfahren zur Herstellung von dentalen Prothesen bei denen zu lang geratene Prothesenzähne basal beschliffen werden. Das basal zu entfernende Aufmaß der gedruckten Prothesen befindet sich dabei in einem gingivaseitigen, dass heißt nicht sichtbaren, Bereich.

US 2015/0104665 A1 offenbart die Herstellung von dentalen Abutments als Kopfteile von Implantaten. Diese Kopfteile müssen so gefräst werden, dass sie auf die Implantate passend aufgesetzt werden können.

US 2023/084657 A1 beschreibt die Verwendung von nur teilweise ausgeformten Restaurationen (Prefabs), bei denen Teile noch abgefräst werden müssen um in einer Prothese eingesetzt zu werden.

WO 2018/005900A1 beschreibt ein Druckverfahren für dentale Restaurationen, wobei das offenbarte Druckverfahren eine geringe Oberflächengenauigkeit und damit verbunden hohe Toleranzen aufweist, die zwangsläufig vollflächig nachgearbeitet werden müssen.

EP 3 496 655 A2 beschreibt ein Verfahren, bei dem eine Prothese oder Teilprothese mit einem additiven oder einem subtraktiven Verfahren gefertigt wird. Zur Vermeidung des Problems eines Materialverlusts am Zahnfleischsaum beim Nachbearbeiten einer dentalen Restauration, der zu ästhetisch unbefriedigenden Ergebnissen führt, wird dort im Bereich der Verbindung zwischen Zähnen und Prothesenbasis ein Aufmaß gegenüber dem Originalmaß erzeugt. Dieses Aufmaß wird anschließend, gemeinsam mit vorhandenem Klebstoffüberschuss, durch subtraktive Bearbeitung vollständig entfernt. Das Problem des Verlusts der markanten Oberflächendetails der dentalen Restauration wird dadurch nicht gelöst.

Es besteht somit Bedarf an weiteren Verfahren zur Herstellung von dentalen Restaurationen.

Die Aufgabe der vorliegenden Erfindung ist es daher, ein Verfahren zur Herstellung einer dentalen Restauration und eine dentale Restauration hergestellt nach dem erfindungsgemäßen Verfahren zur Verfügung zu stellen, welche zumindest einige der aus dem Stand der Technik bekannten Probleme überwinden.

Gelöst wird die erfindungsgemäße Aufgabe durch ein Verfahren zur Herstellung einer dentalen Restauration, insbesondere einer Prothese oder Teilprothese, basierend auf digitalen Daten, insbesondere digitalen Daten aus einer Zahndatenbibliothek, umfassend die Schritte:
a) additive Fertigung einer dentalen Restauration mit teilflächigem Aufmaß einer vestibulären Fläche, und anschließend
b) subtraktive Bearbeitung der Teilflächen mit Aufmaß unter Ausbildung der dentalen Restauration, vorzugsweise mit gewünschter Oberflächenstruktur.

Bei der mit dem erfindungsgemäßen Verfahren hergestellten dentalen Restauration kann es sich um eine Prothese oder eine Teilprothese handeln. Bei diesen kann es sich um eine Voll- oder Teilprothese eines Zahns oder mehrerer Zähne handeln.

Die im erfindungsgemäßen Verfahren verwendeten digitalen Daten können aus einer Zahndatenbibliothek stammen. Hierbei kann es sich um eine CAD-Datenbibliothek oder CAD-Datenbank handeln. Zur Generierung der Daten für die Zahndatenbibliothek wird eine digitale Oberflächenerfassung des Zahns oder der Zähne durchgeführt. Bei den digitalen Daten kann es sich um digitale Zahndaten aus einer Konstruktionsdatei zur Herstellung von Konfektionszähnen oder zur Herstellung von Kronen und/oder Brücken handeln.

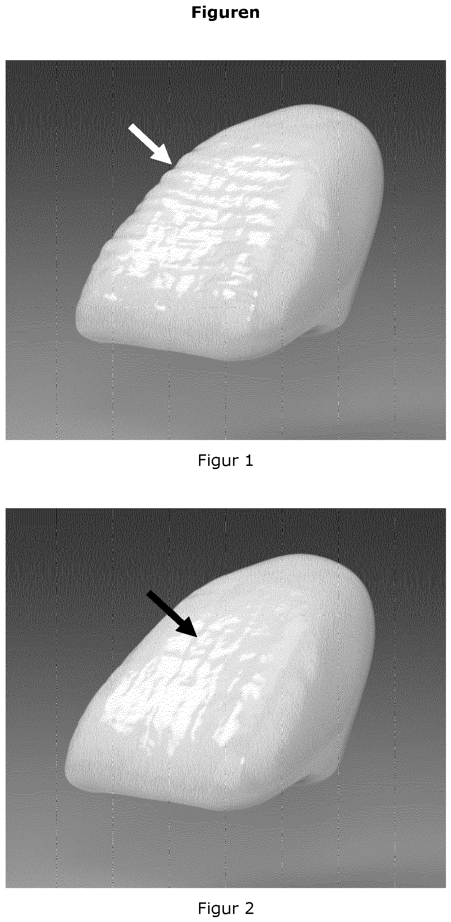

In Schritt a) des erfindungsgemäßen Verfahrens findet die additive Fertigung einer dentalen Restauration statt. Bei der additiven Fertigung werden dreidimensionale Bauteile aus computergestützten Konstruktionsdaten aufgebaut. Die in Schritt a) gefertigte dentale Restauration weist ein teilflächiges Aufmaß auf. "Aufmaß" bedeutet, dass die dentale Restauration eine überdimensionierte oder vergrößerte Außenstruktur aufweist. Das Aufmaß wird der Außenform der dentalen Restauration, die als Produkt des erfindungsgemäßen Verfahrens erhalten werden soll, zugeschlagen. Dadurch wird die charakteristische Oberfläche der dentalen Restauration in ihrem topografischen Verlauf überhöht gestaltet. Hierdurch wird eine Überkonturierung der dentalen Restauration erreicht. Ein Beispiel für eine dentale Restauration mit teilflächigem Aufmaß, wie sie in Schritt a) des erfindungsgemäßen Verfahrens erhalten werden kann, ist in Figur 1 gezeigt. Die Überhöhung bzw. Überdimensionierung der Oberfläche der dentalen Restauration ist gut zu erkennen (weißer Pfeil). "Teilflächiges Aufmaß" bedeutet, dass sich das Aufmaß über einen Teil der Oberfläche der dentalen Restauration erstreckt. Die in Schritt a) erzeugte dentale Restauration mit teilflächigem Aufmaß weist folglich wenigstens eine Teilfläche auf, auf der mehr Material vorhanden ist, als bei der fertigen dentalen Restauration benötigt wird. Es ist nicht notwendig, dass das Aufmaß in allen Bereichen der Teilfläche dieselbe Dimension aufweist. So kann es einzelne Bereiche der Teilfläche mit Aufmaß geben, bei denen das Aufmaß größer oder geringer ist als in anderen Bereichen der Teilfläche mit Aufmaß.

Bei dem teilflächigen Aufmaß handelt es sich bevorzugt um das teilflächige Aufmaß einer vestibulären Fläche. Hierbei handelt es sich um ein Aufmaß, welches sich über einen Teil der vestibulären Fläche oder über die gesamte vestibuläre Fläche erstreckt. "Vestibulär" bedeutet "zum Mundvorhof hin gerichtet". Eine vestibuläre Fläche ist somit die Außenfläche einer dentalen Restauration oder eines Zahns, eine vestibuläre Teilfläche eine Teilfläche der Außenfläche einer dentalen Restauration oder eines Zahns. Der Begriff "vestibulär" kann weiter unterteilt werden. Bei Seitenzähnen spricht man bei der Außenseite von bukkal (zur Wange hin) und im Frontzahnbereich von labial (zur Lippe hin). Bei einer vestibulären Teilfläche kann es sich somit um eine Teilfläche der Labialfläche oder um eine Teilfläche der Bukkalfläche handeln. Das teilflächige Aufmaß kann auf der vestibulären Fläche der Restauration aufgetragen werden, die bei Einsatz der Restauration nich von der Gingiva bedeckt wird.

In Schritt b) findet die subtraktive Bearbeitung der Teilflächen mit Aufmaß, welche in Schritt a) erzeugt wurden, statt. Hierbei wird die dentale Restauration ausgebildet. Durch die in Schritt b) beschriebene subtraktive Bearbeitung der in Schritt a) erzeugten dentalen Restauration mit teilflächigem Aufmaß werden Fertigungsspuren entfernt, die bei der additiven Fertigung entstehen können. Dabei wird das erzeugte teilflächige Aufmaß teilweise mitentfernt. So entsteht die fertige dentale Restauration. Bevorzugt wird dabei eine gewünschte Oberflächenstruktur der dentalen Restauration erzeugt. Eine dentale Restauration, wie sie am Ende des Schritts b) erhalten werden kann, ist exemplarisch in Figur 2 gezeigt. Die natürliche Oberflächenstruktur wird detailgetreu wiedergegeben (schwarzer Pfeil).

Dadurch, dass mehr Material auf der dentalen Restauration mit teilflächigem Aufmaß aus Schritt a) vorhanden ist, als bei der fertigen dentalen Restauration benötigt wird, führt die subtraktive Bearbeitung in Schritt b) nicht dazu, dass so viel Material abgetragen wird, dass die markanten Details der Oberfläche der dentalen Restauration teilweise oder vollständig verschwinden. Dem Anwender steht ausreichend Material zur individuellen Gestaltung und Akzentuierung zur Verfügung. Dadurch weist die fertige dentale Restauration eine lebendige Morphologie auf und wirkt ästhetisch und echt (vgl. Figur 2). Zudem weist die so erhaltene dentale Restauration überraschenderweise auch eine exzellente Speichelbenetzbarkeit auf, was zu einem geringeren Störgefühl im Mund führt.

Bevorzugt handelt es sich bei der dentalen Restauration um eine Prothese oder Teilprothese. Hierbei kann es sich um eine Voll- oder Teilprothese eines Zahns oder mehrerer Zähne handeln. Bevorzugt handelt es sich um eine Voll- oder Teilprothese eines Zahns.

Bevorzugt handelt es sich bei den Teilflächen mit Aufmaß, die in Schritt a) des erfindungsgemäßen Verfahrens erzeugt werden und die in Schritt b) des erfindungsgemäßen Verfahrens bearbeitet werden, um Vestibulärflächen der Restauration, mehr bevorzugt um Labial- oder Bukkalflächen der Restauration.

In einer bevorzugten Ausführungsform befindet sich das teilflächige Aufmaß ausschließlich auf den Vestibulärflächen einer Prothese oder Teilprothese, bevorzugt ausschließlich auf den Labial- oder ausschließlich auf den Bukkalflächen einer Prothese oder Teilprothese.

Bevorzugt beträgt das teilflächige Aufmaß im Durchschnitt 0,05 bis 0,5 mm, mehr bevorzugt im Durchschnitt 0,1 bis 0,3 mm oder 0,2 bis 0,4 mm, noch mehr bevorzugt im Durchschnitt 0,3 bis 0,35 mm. Alternativ beträgt das teilflächige Aufmaß im Durchschnitt 0,05 bis 0,25 mm. "Im Durchschnitt" bedeutet, dass das Aufmaß im Mittel den bezeichneten Wert aufweist. Wenn das teilflächige Aufmaß beispielsweise im Durchschnitt 0,05 bis 0,5 mm beträgt, ist es möglich, dass das teilflächige Aufmaß in einzelnen Bereichen weniger als 0,05 oder mehr als 0,5 mm beträgt, solange das teilflächige Aufmaß über seine gesamte Fläche im Mittel zwischen 0,05 und 0,5 mm beträgt.

In einer bevorzugten Ausgestaltung der vorliegenden Erfindung nimmt das teilflächige Aufmaß 10 bis 90 %, vorzugsweise 15 bis 80%, insbesondere 20 bis 70% und speziell 25 bis 65 % der gesamten vestibulären Fläche ein.

Bevorzugt ist die subtraktive Bearbeitung in Schritt b) des erfindungsgemäßen Verfahrens eine abrasive Bearbeitung. Beispiele für eine subtraktive Bearbeitung sind Schleifen, Polieren, Lasern, Fräsen oder Ätzen. Die Durchführung dieser Verfahren ist dem Fachmann bekannt. Bei den zuvor beschriebenen subtraktiven Verfahren handelt es sich gleichzeitig um abrasive Verfahren.

Bevorzugt erfolgt die subtraktive Bearbeitung durch Schleifen, Polieren, Lasern, Fräsen oder Ätzen. Geeignete Verfahren und Materialien zum Schleifen, Polieren, Lasern, Fräsen oder Ätzen sind dem Fachmann bekannt.

In einer weiteren bevorzugten Ausführungsform erfolgt die subtraktive Bearbeitung durch maschinelles oder manuelles Gleitschleifen unter Zusatz von Schleifkörpern, beispielsweise aus Glas, Keramik, Kunststoff oder Stahl oder bei Nassbearbeitung unter Zusatz von Gleitschleif-Compounds.

Es ist ebenfalls bevorzugt, dass die subtraktive Bearbeitung durch Polieren oder Ätzen und zusätzlich durch maschinelles oder manuelles Gleitschleifen unter Zusatz von Schleifkörpern erfolgt.

Bevorzugt erfolgt die additive Fertigung durch ein Verfahren ausgewählt aus der Gruppe bestehend aus Tintenstrahl-Druckverfahren, Stereolithographie, LIFT-Verfahren (Laser Induced Forward Transfer-Verfahren), Polyjet-Verfahren, 3D-Druckverfahren, Mehrfarben-3D-Druckverfahren, 2-Photonen-Polymerisationsverfahren und Drop-on-Demand-Druckverfahren.

Bei der Stereolithographie wird Material, z.B. ein lichtaushärtender Kunststoff (Photopolymer) wie Acryl-, Epoxid- oder Vinylesterharz, in dünnen Schichten ausgehärtet. Das Aushärten kann z.B. mit einem Laser erfolgen. Die Prozedur geschieht in einem Bad, das z.B. mit den Basismonomeren des lichtempfindlichen (photosensitiven) Kunststoffes gefüllt ist. Nach jedem Schritt wird das Werkstück einige Millimeter in die Flüssigkeit abgesenkt und auf eine Position zurückgefahren, die um den Betrag einer Schichtstärke unter der vorherigen liegt. Der flüssige Kunststoff über dem Teil wird dann durch einen Wischer, bzw. Rakel, gleichmäßig verteilt. Dann fährt ein Laser, der von einem Computer gesteuert wird, auf der neuen Schicht über die Flächen, die ausgehärtet werden sollen. Nach dem Aushärten erfolgt der nächste Schritt, sodass nach und nach ein dreidimensionales Modell entsteht.

Neben der Stereolithographie ist auch das 3D-Drucken ein verbreitetes Verfahren zur Herstellung von keramischen oder organischen Formteilen. Bei diesem Verfahren wird eine Bindemittellösung in ein Pulverbett gedruckt. Die Bindemittel verkleben die Pulverteilchen und bilden so eine verfestigte zweidimensionale Struktur aus Pulver. Nach jeder so hergestellten Schicht wird eine neue Schicht loses Pulver auf die 2D-Struktur aufgebracht, in die wiederum Bindemittel verdüst wird. Durch viele Wiederholungen dieses Schrittes entsteht ein aus vielen Schichten aufgebautes dreidimensionales Objekt, das durch Entfernen des nicht verfestigten Pulvers leicht freigelegt werden kann. Bei Verwendung von keramischem Pulver wird das Bindemittel ausgebrannt und die Keramik nachfolgend durch einen Sinterprozess verdichtet.

Ein weiteres additives Fertigungsverfahren, das zur Herstellung von keramischen oder organischen Formteilen geeignet ist, ist das Tintenstrahl-Druckverfahren (Inkjet-Verfahren), bei mehreren Druckköpfen auch als Polyjet-Verfahren bezeichnet. Dabei werden, analog dem Prinzip der aus dem Büroalltag bekannten klassischen Tintenstrahldrucker, direkt 3D-Objekte gedruckt, indem durch eine oder mehrere Düsen flüssige, auch polymerisierbare Modellmaterialien ("Tinten") in definierten Tropfen abgegeben werden, die Tinte aushärtet und so die Schichten in der XY-Ebene bildet. Simultan kann ein leicht entfernbares Stützmaterial verdruckt werden. Durch wiederholtes Übereinanderdrucken von Schichten aus Modell- und gegebenenfalls Stützmaterial entsteht ein dreidimensionales Objekt. Nach Trennen des gedruckten Objektes von der Stützstruktur, beispielsweise durch selektives chemisches Lösen des Stützmaterials, liegt ein 3D-Bauteil vor. Beim Drop-on-Demand-Druckverfahren werden hierbei die definierten Tintentropfen genau nach Bedarf abgegeben.

Das LIFT-Verfahren (Laser Induced Forward Transfer-Verfahren) ist ein hochauflösendes, berührungsloses, lösungsmittelfreies Druckverfahren, bei dem eine Hochleistungslaser-Bestrahlung die Ablation der flüssigen oder festen Tinte induziert und so die Abscheidung einer großen Vielfalt organischer und anorganischer Materialien ermöglicht. Das LIFT-Verfahren bietet eine hohe laterale Auflösung, da es nur durch die Größe des Laserspots begrenzt ist, die im Bereich weniger Mikrometer liegt.

Das Zwei-Photonen-Polymerisationsverfahren ist ein additives Verfahren mit möglichen Linienbreiten und -höhen unterhalb der Beugungsgrenze. Durch den physikalischen Effekt der Zwei-Photonen-Absorption in einem photosensitiven Polymer lassen sich nahezu beliebige Geometrien erzeugen. Dies geschieht durch eine Relativbewegung zwischen einem fokussierten Laserstrahl und der Probe, bestehend aus einem Substrat und einem flüssigem Photopolymer. Das Polymer vernetzt ausschließlich in einem volumetrischen Pixel, dem sogenannten Voxel, innerhalb des Laserfokus. Die Zwei-Photonen-Polymerisation kann als Äquivalent für den 3D-Druck im Mikrometerbereich angesehen werden. Im Gegensatz z.B. zur UV-Lithographie wird bei der Zwei-Photonen-Polymerisation das Polymer nicht mit UV-Licht, sondern mit Femtosekunden-Laserpulsen im sichtbaren bis nahinfraroten Spektralbereich belichtet.

Geeignete Geräte, mit denen die zuvor beschriebenen additiven Fertigungsverfahren durchgeführt werden können, sind dem Fachmann bekannt.

Bevorzugt umfasst die dentale Restauration keramisches oder organisches Material.

In einer bevorzugten Ausführungsform umfasst die dentale Restauration keramisches Material, ausgewählt aus der Gruppe umfassend Zirkoniumdioxid, Lithiumsilikat und Feldspat.

In einer weiteren bevorzugten Ausführungsform umfasst die dentale Restauration keramisches Material, ausgewählt aus der Gruppe umfassend Al₂O₃, ZrO₂, Si₃N₄, SSiC, Hydroxylapatit, SiAlON, Silica und Tricalciumphosphat.

In einer weiteren bevorzugten Ausführungsform umfasst die dentale Restauration organisches Material, ausgewählt aus anorganisch gefüllten oder ungefüllten Acrylaten, anorganisch gefüllten oder ungefüllten thermoplastischen Hochleistungspolymeren und anorganisch gefüllten oder ungefüllten lichtempfindlichen Monomermischungen basierend auf Epoxid-/Acrylatmonomeren. Bevorzugt umfasst die dentale Restauration anorganisch gefüllte Acrylate. Ein Beispiel für ein anorganisch gefülltes Acrylat ist VITA CAD-Temp° monocolor (VITA Zahnfabrik H. Rauter GmbH & Co. KG, Deutschland). Der Begriff des Hochleistungspolymers (high performance polymers) wird in der Polymerchemie verwendet, um diese Polymere von Standardkunststoffen (commodity polymers) und technischen Kunststoffen (engineering polymers) abzugrenzen. Alle drei Begriffe sind dem Fachmann bekannt. Beispiele für thermoplastische Hochleistungspolymere sind Polyetheretherketon (PEEK) und Polyetherketon (PEK).

Gegenstand der Erfindung ist weiterhin eine dentale Restauration hergestellt nach dem erfindungsgemäßen Verfahren. Die dentale Restauration enthält die gewünschten charakteristischen Merkmale der Oberflächenmorphologie. So können beispielsweise charakteristische Krümmungsmerkmale der ursprünglichen Zahnform beibehalten werden. Dadurch, dass die Oberfläche der erfindungsgemäßen dentalen Restauration eine überraschend gute Speichelbenetzbarkeit aufweist, ruft die dentale Restauration im Mund ein geringes Störgefühl hervor.

Gegenstand der Erfindung ist zudem die Verwendung von digitalen Daten für die Herstellung von dentalen Restaurationen mittels einem additiven Fertigungsverfahren, bevorzugt mittels einem 3D-Druckverfahren, dadurch gekennzeichnet, dass die Daten zu einem teilflächigen Aufmaß der gewünschten Restauration führen.

### Figuren:

Figur 1 zeigt eine dentale Restauration (Prothesen-Frontzahn) mit teilflächigem Aufmaß, wie sie am Ende von Schritt a) des erfindungsgemäßen Verfahrens erhalten werden kann. Die natürliche Morphologie des Zahns wird überhöht wiedergegeben, sodass auch nach anschließender subtraktiver Bearbeitung der Teilflächen mit Aufmaß (Schritt b) des erfindungsgemäßen Verfahrens) die charakteristische Oberflächenstruktur deutlich zu erkennen ist.

Figur 2 zeigt eine dentale Restauration (Prothesen-Frontzahn) mit charakteristischer Oberflächenmorphologie, wie sie nach Durchführung des erfindungsgemäßen Verfahrens erhalten werden kann.

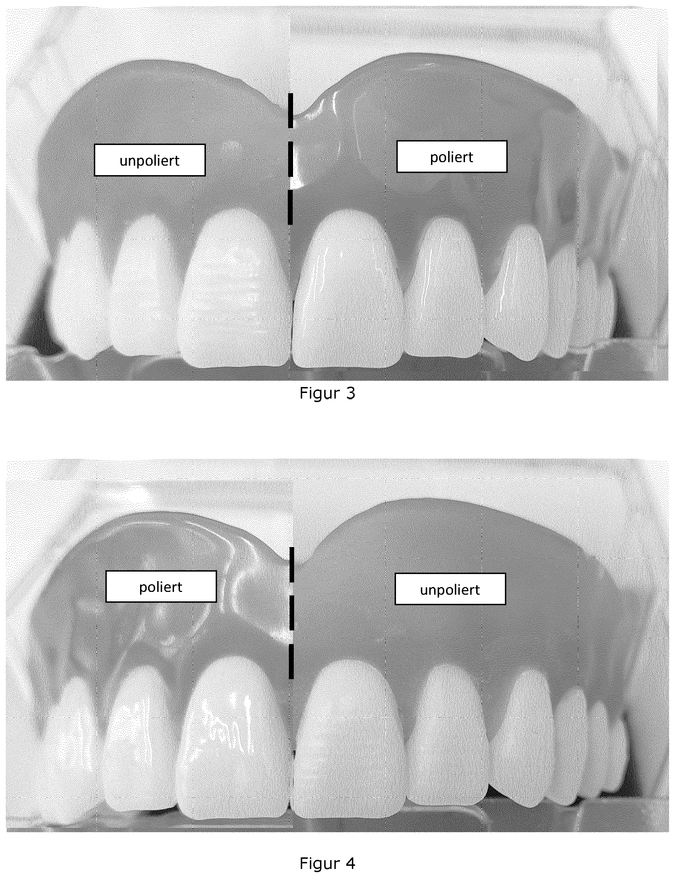

Figur 3 zeigt mit einem im Stand der Technik bekannten subtraktiven Fertigungsverfahren gefertigte Zähne. Die linke Seite der Figur 3 zeigt die gefrästen, unpolierten Zähne. Durch Spuren, die durch die subtraktive Fertigung zurückbleiben, erscheinen die Zähne matt, was eine glättende Nachbearbeitung zwingend notwendig macht. Die nachbearbeiteten, polierten Zähne sind auf der rechten Seite der Figur 3 gezeigt.

Figur 4 zeigt mit einem im Stand der Technik bekannten additiven Fertigungsverfahren gefertigte Zähne. Die rechte Seite der Figur 4 zeigt die unpolierten Zähne direkt nach der additiven Fertigung. Durch Spuren, die durch die additive Fertigung zurückbleiben, erscheinen die Zähne matt, was eine glättende Nachbearbeitung zwingend notwendig macht. Die nachbearbeiteten, polierten Zähne sind auf der linken Seite der Figur 4 gezeigt.

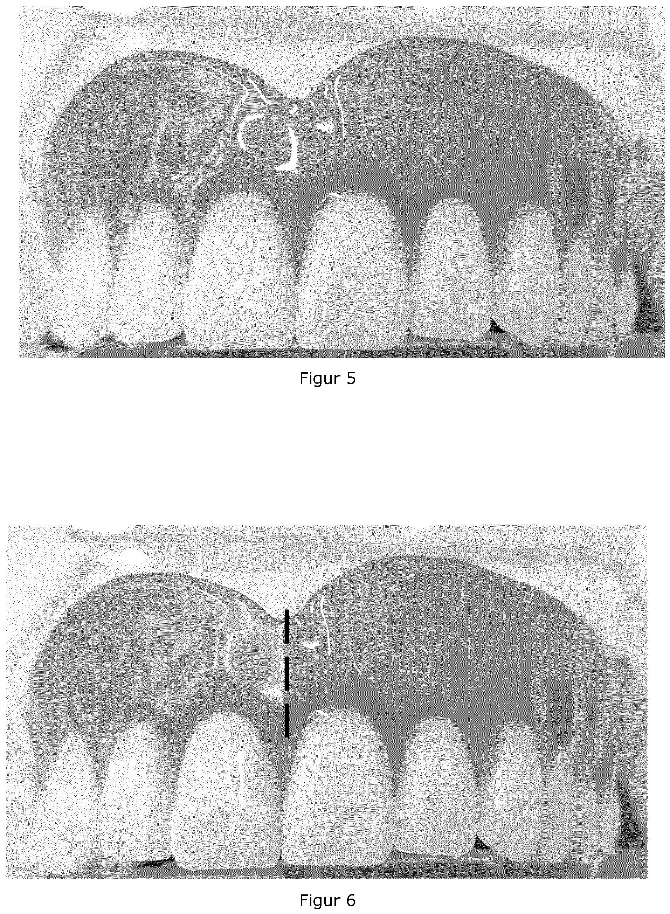

Figur 5 zeigt dentale Restaurationen, hergestellt nach dem erfindungsgemäßen Verfahren.

Figur 6 zeigt einen direkten Vergleich der in Figur 4 und in Figur 5 erhaltenen dentalen Restaurationen. Links sind die Zähne der Figur 4 dargestellt (erhalten durch additive Fertigung ohne teilflächiges Aufmaß), rechts die Zähne der Figur 5 (erhalten nach dem erfindungsgemäßen Verfahren).

Die Erfindung wird durch die nachfolgenden Beispiele näher erläutert:

### Vergleichsbeispiel 1:

Es wurden dentale Restaurationen anhand eines im Stand der Technik bekannten subtraktiven Verfahrens erstellt. Die dentalen Restaurationen wurden mittels CNC-Fräsmaschine (Modell: CORiTEC^{®} 350i Loader; Hersteller: imes-icore, Deutschland) aus einer "VITA CAD-Temp^{®} monocolor" Disc (Farbe: 2M2T; Hersteller: VITA Zahnfabrik H. Rauter GmbH & Co. KG, Deutschland) hergestellt. Bei den verwendeten digitalen Daten handelte es sich um eine STL-Datei aus einer Zahndatenbank (CAD-Datenbank). Zur Nachbearbeitung wurde das gefräste Modell manuell aus der Disc getrennt, mit der Prothesenbasis verklebt und anschließend poliert.

Wie sich in Figur 3, linke Seite, gut erkennen lässt, weisen die Oberflächen der erhaltenen Zähne im unpolierten Zustand markante und charakteristische Merkmale auf ("wellenförmige" Erhebungen in horizontaler Richtung). Die Oberflächen erscheinen durch Spuren des subtraktiven Fertigungsverfahrens matt, sodass eine glättende Nachbearbeitung zwingend notwendig ist. Die polierten Oberflächen der erhaltenen Zähne - rechte Seite der Figur 3 - besitzen jedoch eine Oberflächenmorphologie ohne markante und charakteristische Merkmale und sind nahezu glatt. Die Zähne wirken dadurch unnatürlich und künstlich. Mit der subtraktiven Fertigungsmethode konnten die charakteristischen Merkmale der Oberflächenmorphologie nicht vollständig abgebildet werden. Zudem gingen vorhandene Details bei der Nachbearbeitung der Zähne verloren. Es wurde außerdem festgestellt, dass die erhaltenen Zähne eine geringere Speichelbenetzbarkeit aufwiesen.

### Vergleichsbeispiel 2:

Es wurden dentale Restaurationen anhand eines im Stand der Technik bekannten additiven Verfahrens erstellt. Bei den verwendeten digitalen Daten handelte es sich um dieselbe STL-Datei aus einer Zahndatenbank (CAD-Datenbank), die in Vergleichsbeispiel 1 verwendet wurde. Ausgehend von diesen digitalen Daten wurden die dentalen Restaurationen mittels SLA 3D-Druck mit einem 3D-Drucker (Modell: "Form2"; Hersteller: Formlabs GmbH, Deutschland) additiv gefertigt. Bei dem verwendeten Material handelte es sich um "Denture Teeth A2 Resin" (Hersteller: Formlabs GmbH, Deutschland). Zur Nachbearbeitung wurden die 3D-gedruckten Zähne manuell von Stützmaterial befreit, mit der Prothesenbasis verklebt und anschließend poliert.

Wie sich in Figur 4, rechte Seite, gut erkennen lässt, weisen die Oberflächen der erhaltenen Zähne im unpolierten Zustand markante und charakteristische Merkmale auf ("wellenförmige" Erhebungen in horizontaler Richtung). Die Oberflächen erscheinen durch Spuren des additiven Fertigungsverfahrens matt, sodass eine glättende Nachbearbeitung zwingend notwendig ist. Die polierten Oberflächen der Zähne - linke Seite der Figur 4 - besitzen jedoch eine Oberflächenmorphologie ohne deutliche markante und charakteristische Merkmale. Die Oberflächen erscheinen durch die Nachbearbeitung stark verwaschen. Die Zähne wirken insgesamt zwar natürlicher und weniger künstlich als die Zähne des Vergleichsbeispiels 1, jedoch ist der ästhetische Eindruck insgesamt nicht zufriedenstellend. Mit der additiven Fertigungsmethode konnten die charakteristischen Merkmale der Oberflächenmorphologie nicht vollständig abgebildet werden. Zudem gingen vorhandene Details bei der Nachbearbeitung der Zähne verloren. Es wurde zudem festgestellt, dass die erhaltene dentale Restauration eine Speichelbenetzbarkeit aufwies, die gegenüber der des Vergleichsbeispiels 1 nur wenig verbessert war.

### Beispiel 1:

Es wurden dentale Restaurationen nach dem erfindungsgemäßen Verfahren hergestellt. Bei den verwendeten digitalen Daten handelte es sich um eine STL-Datei aus einer Zahndatenbank (CAD-Datenbank), welche über die Informationen verfügt, um eine dentale Restauration mit teilflächigem Aufmaß zu erzeugen. Ausgehend von diesen digitalen Daten wurden die Zähne mittels SLA 3D-Druck mit einem 3D-Drucker (Modell: "Form2"; Hersteller: Formlabs GmbH, Deutschland) additiv gefertigt. Bei dem verwendeten Material handelte es sich um "Denture Teeth A2 Resin" (Hersteller: Formlabs GmbH, Deutschland). Zur Nachbearbeitung wurden die 3D-gedruckten Zähne manuell von Stützmaterial befreit, mit der Prothesenbasis verklebt und anschließend poliert.

Wie sich in Figur 5 erkennen lässt, weist die Oberfläche der erhaltenen Zähne im polierten Zustand (unpolierter Zustand nicht gezeigt) eine Oberflächenmorphologie mit charakteristischen Merkmalen auf. Die Oberflächen sind nicht glatt, sondern haben in horizontaler Richtung "wellenförmige" Erhebungen. Diese "wellenförmigen" Erhebungen sind bei den Vergleichsbeispielen 1 und 2 nur vor dem Nachbearbeitungsschritt vorhanden und gehen durch die Nachbearbeitung verloren. Die natürliche Morphologie der Zähne wird bei den nach dem erfindungsgemäßen Verfahren erhaltenen Zähnen detailgetreu wiedergegeben. Dadurch wirken die Zähne lebendig und echt. Überraschenderweise wurde zudem festgestellt, dass die erhaltenen Zähne eine deutlich bessere Speichelbenetzbarkeit aufwiesen als die Zähne der Vergleichsbeispiele 1 und 2.

Figur 6 zeigt einen direkten Vergleich der im Vergleichsbeispiel 2 und im Beispiel 1 erhaltenen dentalen Restaurationen. Links sind die Zähne aus Vergleichsbeispiel 2 dargestellt, rechts die Zähne aus dem Beispiel 1. Hier wird besonders deutlich, dass die Zähne aus Beispiel 1 im Gegensatz zu den Zähnen aus Vergleichsbeispiel 2 die charakteristischen "wellenförmigen" Erhebungen in horizontaler Richtung und somit die gewünschte Oberflächenstruktur aufweisen.

## Patentansprüche

1. Verfahren zur Herstellung einer dentalen Restauration, insbesondere einer Prothese oder Teilprothese, basierend auf digitalen Daten, insbesondere digitalen Daten aus einer Zahndatenbibliothek, umfassend die Schritte:
a) additive Fertigung einer dentalen Restauration teilflächigem Aufmaß einer vestibulären Fläche, und anschließend
b) subtraktive Bearbeitung der Teilflächen mit Aufmaß unter Ausbildung der dentalen Restauration, vorzugsweise mit gewünschter Oberflächenstruktur.

2. Verfahren gemäß Anspruch 1, **dadurch gekennzeichnet, dass** die dentale Restauration eine Prothese oder Teilprothese ist.

3. Verfahren gemäß Anspruch 1 oder 2 **dadurch gekennzeichnet, dass** die Teilflächen mit Aufmaß Vestibulärflächen der Restauration, bevorzugt Labial- oder Bukkalflächen der Restauration, sind.

4. Verfahren gemäß einem der vorangehenden Ansprüche, **dadurch gekennzeichnet, dass** sich das teilflächige Aufmaß ausschließlich auf den Vestibulärflächen einer Prothese oder Teilprothese, bevorzugt ausschließlich auf den Labial- oder ausschließlich auf den Bukkalflächen einer Prothese oder Teilprothese, befindet.

5. Verfahren gemäß einem der vorangehenden Ansprüche, **dadurch gekennzeichnet, dass** das teilflächige Aufmaß im Durchschnitt 0,05 bis 0,5 mm oder 0,05 bis 0,25 mm beträgt.

6. Verfahren gemäß einem der vorangehenden Ansprüche, **dadurch gekennzeichnet, dass** die subtraktive Bearbeitung eine abrasive Bearbeitung ist.

7. Verfahren gemäß einem der vorangehenden Ansprüche, **dadurch gekennzeichnet, dass** die subtraktive Bearbeitung durch Schleifen, Polieren, Lasern, Fräsen oder Ätzen erfolgt.

8. Verfahren gemäß einem der vorangehenden Ansprüche, **dadurch gekennzeichnet, dass** die subtraktive Bearbeitung durch maschinelles oder manuelles Gleitschleifen unter Zusatz von Schleifkörpern erfolgt.

9. Verfahren gemäß einem der vorangehenden Ansprüche, **dadurch gekennzeichnet, dass** die additive Fertigung durch ein Verfahren ausgewählt aus der Gruppe bestehend aus Tintenstrahl-Druckverfahren, Stereolithographie, LIFT-Verfahren (Laser Induced Forward Transfer-Verfahren), Polyjet-Verfahren, 3D-Druckverfahren, Mehrfarben-3D-Druckverfahren, 2-Photonen-Polymerisationsverfahren und Drop-on-Demand-Druckverfahren erfolgt.

10. Verfahren gemäß einem der vorangehenden Ansprüche, **dadurch gekennzeichnet, dass** die dentale Restauration keramisches oder organisches Material umfasst.

11. Verfahren gemäß einem der vorangehenden Ansprüche, **dadurch gekennzeichnet, dass** die dentale Restauration keramisches Material umfasst, ausgewählt aus der Gruppe umfassend Zirkoniumdioxid, Lithiumsilikat und Feldspat.

12. Verfahren gemäß einem der vorangehenden Ansprüche, **dadurch gekennzeichnet, dass** die dentale Restauration keramisches Material umfasst, ausgewählt aus der Gruppe umfassend AL₂O₃, ZrO₂, Si₃N₄, SSiC, Hydroxylapatit, SiAlON, Silica und Tricalciumphosphat.

13. Verfahren gemäß einem der Ansprüche 1 bis 10, **dadurch gekennzeichnet, dass** die dentale Restauration organisches Material umfasst, ausgewählt aus anorganisch gefüllten oder ungefüllten Acrylaten, anorganisch gefüllten oder ungefüllten thermoplastischen Hochleistungspolymeren und anorganisch gefüllten oder ungefüllten lichtempfindlichen Monomermischungen basierend auf Epoxid-/Acrylatmonomeren.

14. Dentale Restauration hergestellt nach dem Verfahren gemäß einem oder mehreren der vorangehenden Ansprüche.

15. Verwendung von digitalen Daten für die Herstellung von dentalen Restaurationen mittels einem additiven Fertigungsverfahren, **dadurch gekennzeichnet, dass** die Daten zu einem teilflächigen Aufmaß der gewünschten Restauration führen.
